# EUROPEAN PATENT SPECIFICATION

(11) **EP 4 579 611 B1**
(45) Date of publication and mention of the grant of the patent: **02.12.2026**
(21) Application number: 24211605.1
(22) Date of filing: 08.11.2024
(51) Int. Cl.: G06V 10/776, G06V 10/70, G06V 10/98, G06V 20/58, A01B 79/00

(54) **IDENTIFYING INCORRECTLY CONFIGURED PLANT IDENTIFICATION MODELS IN A FARMING MACHINE**
IDENTIFIZIERUNG FEHLERHAFT KONFIGURIERTER ANLAGENIDENTIFIKATIONSMODELLE IN EINER LANDWIRTSCHAFTSMASCHINE
IDENTIFICATION DE MODÈLES D'IDENTIFICATION DE PLANTES MAL CONFIGURÉS DANS UNE MACHINE AGRICOLE

(30) Priority: 28.12.2023 US 202318398464
(43) Date of publication of application: 02.07.2025
(73) Proprietor: Deere & Company, Moline, IL 61265 (US)
(72) Inventor: CHANDRASHEKAR, ANURADHA, 68163 Mannheim (DE); ABRAMOWICZ, BRIANNE, 68163 Mannheim (DE); PADWICK, CHRISTOPHER GRANT, 68163 Mannheim (DE); EVANS, DAVID, 68163 Mannheim (DE); KULKARNI, DIVYA, 68163 Mannheim (DE); REESE, FILIP R, 68163 Mannheim (DE); OLGERT, DENAS, 68163 Mannheim (DE); SUNNYVALE, QUAN BUI, 68163 Mannheim (DE)
(74) Representative: Holst, Sönke

(56) References cited:
- US-A1- 2023 245 249
- US-A1- 2023 252 624
- US-B2- 11 580 718
- DU YAYUN ET AL: "Deep-CNN based Robotic Multi-Class Under-Canopy Weed Control in Precision Farming", 2022 INTERNATIONAL CONFERENCE ON ROBOTICS AND AUTOMATION (ICRA), IEEE, 23 May 2022 (2022-05-23), pages 2273 - 2279, XP034146198, DOI: 10.1109/ICRA46639.2022.9812240
- CRUZ RAFAEL M.O. ET AL: "Dynamic classifier selection: Recent advances and perspectives", INFORMATION FUSION ELSEVIER, US, vol. 41, 1 May 2018 (2018-05-01), pages 195 - 216, XP085265397, ISSN: 1566-2535, [retrieved on 20170911], DOI: 10.1016/J.INFFUS.2017.09.010
- PAGE-FORTIN MATHIEU: "Class-Incremental Learning of Plant and Disease Detection: Growing Branches with Knowledge Distillation", 2023 IEEE/CVF INTERNATIONAL CONFERENCE ON COMPUTER VISION WORKSHOPS (ICCVW) IEEE, 2 October 2023 (2023-10-02), pages 593 - 603, XP034503754, [retrieved on 20231225], DOI: 10.1109/ICCVW60793.2023.00066

## Description

This disclosure relates to identifying and treating plants in a field with a plant identification model, and, more particularly, to determining a plant identification model is incorrectly configured to identify and treat plants in the field and remedying the incorrect configuration as needed.

### RELATED ART

Modern farming machines are often equipped with advanced technology to improve the efficiency and effectiveness of farming practices. These technologies may include plant identification systems and models, which allow the farming machine to detect and identify different types of plants in a field (such as crops, weeds, and other relevant flora). Accurate plant identification is crucial for various farming applications, such as targeted pesticide or herbicide application, crop thinning, and harvesting.

To ensure optimal performance, these plant identification systems and models typically require appropriate configuration, which can include pre-defining specific target plant species or classes for the farming machine to identify and treat. An incorrect configuration of the plant identification systems or models model lead to a suboptimal performance of the farming machine, potentially causing damage to crops, ineffective weed control, or other unfavorable consequences. Most farming machines rely on the operator or the field manager to configure the plant identification model correctly. However, human error, miscommunication, or misunderstandings may lead to incorrect configurations, which could affect the quality and efficiency of the farming process.

Du Yayun et al., Deep CNN based Robotic Multi-Class Under-Canopy Weed Control in Precision Farming, 2022 International Conference on Robotics and Automation (ICRA), IEEE, 20. May 2022, Pages 2272-2279, DOI: 10.1109/ICRA46639.2022.9812240, describe an image-based recognition of plants in a field using a first and second plant identification model. A neural network identifies a first type of plants and a second type of plants.

PAGE-FORTIN MATHIEU: "Class-Incremental Learning of Plant and Disease Detection: Growing Branches with Knowledge Distillation",2023 IEEE/CVF INTERNATIONAL CONFERENCE ON COMPUTER VISION WORKSHOPS (ICCVW) IEEE, 2 October 2023, pages 593-603, DOI: 10.1109/ICCVW60793.2023.00066, discloses an incremental learning method for plant identification, which can be applied when new classes of plants emerge on a field.

CRUZ RAFAEL M.O. ET AL: "Dynamic classifier selection: Recent advances and perspectives", INFORMATION FUSION, ELSEVIER, US, vol. 41, May 2018, pages 195-216, DOI: 10.1016/ J.INFFUS.2017.09.010, provides a review of recent methods for dynamic classifier selection.

Systems and methods are needed to automatically and accurately identify incorrectly configured plant identification models in farming machines, allowing for real-time adjustments when needed and improving the performance and efficiency of the farming process.

### SUMMARY

The present invention is defined by the claims.

Techniques described herein relate to a method for treating plants in a field, the method including: accessing a plurality of images of plants in the field as a farming machine travels through the field treating the plants; applying, to the plurality of images a first plant identification model configured to identify a first class of plant in images, the first plant identification model identifying plants as the first class of plant by determining first likelihoods the plants are the first class of plant; determining, based on the determined first likelihoods the plants are the first class of plant, a probability that plants in the field are a second class of plant by applying a verification model to the output of the first plant identification model; applying, based on based on a determination that the plants are the second class of plants, a second plant identification model configured to identify the second class of plant to the plurality of images, the second plant identification model identifying plants as the second class of plant by determining second likelihoods the plants are the second class of plant; and treating, with the farming machine, a plant identified as the second class of plant based on the determined second likelihood the plant is the second class of plant.

In some aspects, the techniques described herein relate to a method, wherein the first plant identification model and the second plant identification model are a single plant identification model configured to identify both the first class of plant and the second class of plant.

In some aspects, the techniques described herein relate to a method, wherein applying, based on the determination, the second plant identification model to the plurality of images includes reconfiguring one or more parameters of the first plant identification model and applying the reconfigured first plant identification model to the plurality of images as the second plant identification model.

In some aspects, the techniques described herein relate to a method, wherein applying the first plant identification model to the plurality of images includes receiving, from an operator of the farming machine, an instruction to identify first class of plants in the field.

In some aspects, the techniques described herein relate to a method, wherein determining a probability that the plants in the field are a second class of plants includes: for each image in the plurality of images, determining a first likelihood the image includes plants of the first class of plant, and calculating the probability the plants in the field are the second class based on one or more determined first likelihoods for one or more previous images in the plurality of images.

In some aspects, the techniques described herein relate to a method, wherein calculating the probability the plants in the field are the second class includes applying a smoothing function to the one or more determined first likelihoods for the one or more previous images.

In some aspects, the techniques described herein relate to a method, further including: determining, based on the determined second likelihoods the plants are the second class of plant, an additional probability that plants in the field are a third class of plant; applying, based on the probability, a third plant identification model configured to identify the third class of plant to the plurality of images, the third plant identification model identifying plants as the third class of plant by determining third likelihoods the plants are the third class of plant; and treating, with the farming machine, a different plant identified as the third class of plant based on the determined third likelihood the plant is the third class of plants.

In some aspects, the techniques described herein relate to a method, wherein the first plant identification model, the second plant identification model, and the third plant identification model are a single plant identification model configured to identify the first class of plant, the second class of plant, and the third class of plant.

In some aspects, the techniques described herein relate to a method, wherein applying, based on the determination, the second plant identification model configured to identify the second class of plant to the plurality of images includes: transmitting, to an operator of the farming machine, a notification including the determined probability that plants in the field are the second class of plant; and receiving, from the operator of the farming machine, an instruction to identify plants of the second class of plants in the field.

In some aspects, the techniques described herein relate to a method, wherein applying the second plant identification model configured to identify the second class of plant to the plurality of images occurs autonomously responsive to the determined probability that plants in the field are a second class of plant being above a threshold probability.

The techniques described herein relate to a farming machine including: an image acquisition system configured to capture images of plants in a field as the farming machine traverses past the plants in the field; a plurality of treatment mechanisms configured to treat identified plants in the field; one or more processors; and a non-transitory computer readable storage medium computer program instructions that, when executed by the one or more processors, cause the farming machine to: access, from the image acquisition system, a plurality of images of plants in the field as the farming machine travels through the field, apply, to the plurality of images, a first plant identification model configured to identify a first class of plant in images, the first plant identification model identifying plants as the first class of plant by determining first likelihoods the plants are the first class of plant, determine, based on the determined first likelihoods the plants are the first class of plant, a probability that plants in the field are a second class of plant by applying a verification model to the output of the first plant identification model; apply, based on a determination that the plants are the second class of plants, a second plant identification model configured to identify the second class of plant to the plurality of images, the second plant identification model identifying plants as the second class of plant by determining second likelihoods the plants are the second class of plant; and treat, using a treatment mechanism of the plurality, a plant identified as the second class of plant based on the determined second likelihood the plant is the second class of plant.

In some aspects, the techniques described herein relate to a farming machine, wherein the first plant identification model and the second plant identification model are a single plant identification model configured to identify both the first class of plant and the second class of plant.

In some aspects, the techniques described herein relate to a farming machine, wherein applying, based on the determination, the second plant identification model to the plurality of images, further causes the one or more processors to reconfigure one or more parameters of the first plant identification model and apply the reconfigured first plant identification model to the plurality of images as the second plant identification model.

In some aspects, the techniques described herein relate to a farming machine, wherein applying the first plant identification model to the plurality of images further causes the one or more processors to receive, from an operator of the farming machine, an instruction to identify first class of plant in the field.

In some aspects, the techniques described herein relate to a farming machine, wherein determining a probability that the plants in the field are a second class of plants further causes the one or more processors to: for each image in the plurality of images, determine a first likelihood the image includes plants of the first class of plant, and calculate the probability the plants in the field are the second class based on one or more determined first likelihoods for one or more previous images in the plurality of images.

In some aspects, the techniques described herein relate to a farming machine, wherein calculating the probability the plants in the field are the second class further causes the one or more processors to apply a smoothing function to the one or more determined first likelihoods for the one or more previous images.

In some aspects, the techniques described herein relate to a farming machine, wherein the computer program instructions further cause the one or more processors to: determine, based on the determined second likelihoods the plants are the second class of plant, an additional probability that plants in the field are a third class of plant; apply, based on the probability, a third plant identification model configured to identify the third class of plant to the plurality of images, the third plant identification model identifying plants as the third class of plant by determining third likelihoods the plants are the third class of plant; and treat, using a different treatment mechanism of the plurality, a different plant identified as the third class of plant based on the determined third likelihood the plant is the third class of plants.

In some aspects, the techniques described herein relate to a farming machine, wherein the first plant identification model, the second plant identification model, and the third plant identification model are a single plant identification model configured to identify the first class of plant, the second class of plant, and the third class of plant.

In some aspects, the techniques described herein relate to a farming machine, wherein applying, based on the determination, the second plant identification model configured to identify the second class of plant to the plurality of images further causes the one or more processors to: transmit, to an operator of the farming machine, a notification including the determined probability that plants in the field are the second class of plant; and receive, from the operator of the farming machine, an instruction to identify plants of the second class of plants in the field.

### BRIEF DESCRIPTION OF DRAWINGS

FIG. 1A illustrates an isometric view of a farming machine, in accordance with a first example embodiment.
FIG. 1B illustrates a top view of a farming machine, in accordance with the first embodiment.
FIG. 1C illustrates an isometric view of a farming machine, in accordance with a second example embodiment.
FIG. 2 is a block diagram of the system environment for the farming machine, in accordance with an example embodiment.
FIG. 3 illustrates a model performance analysis system, in accordance with an example embodiment.
FIG. 4A illustrates a first example implementation of a verification model, in accordance with an example embodiment.
FIG. 4B illustrates a second example implementation of a verification model, in accordance with an example embodiment.
FIG. 5 illustrates an example of a control system autonomously configuring a plant identification model using an model performance analysis system as a farming machine travels through a field, in accordance with an example embodiment.
FIG. 6 illustrates an example workflow diagram for identifying a plant identification model of a farming machine is incorrectly configured, in accordance with an example embodiment.
FIG. 7 is a block diagram illustrating components of an example machine for reading and executing instructions from a machine-readable medium, in accordance with one or more example embodiments.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

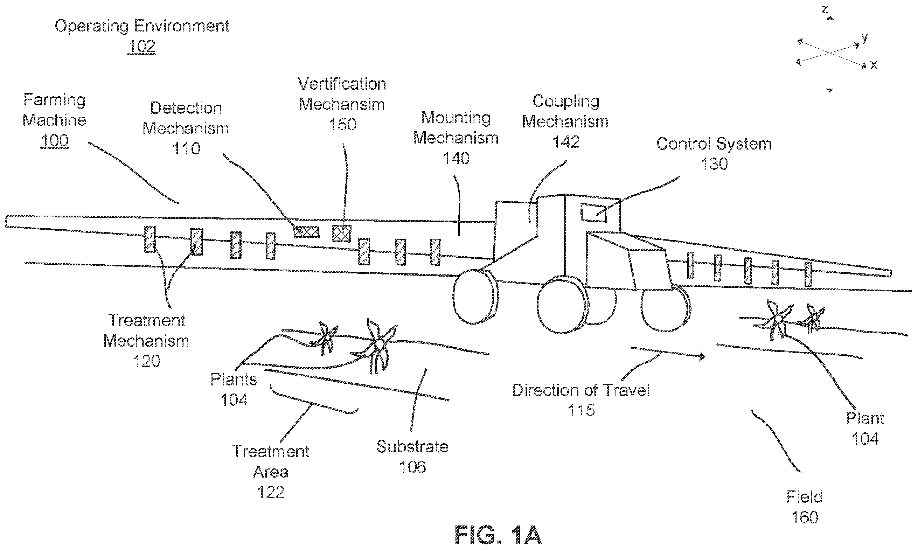

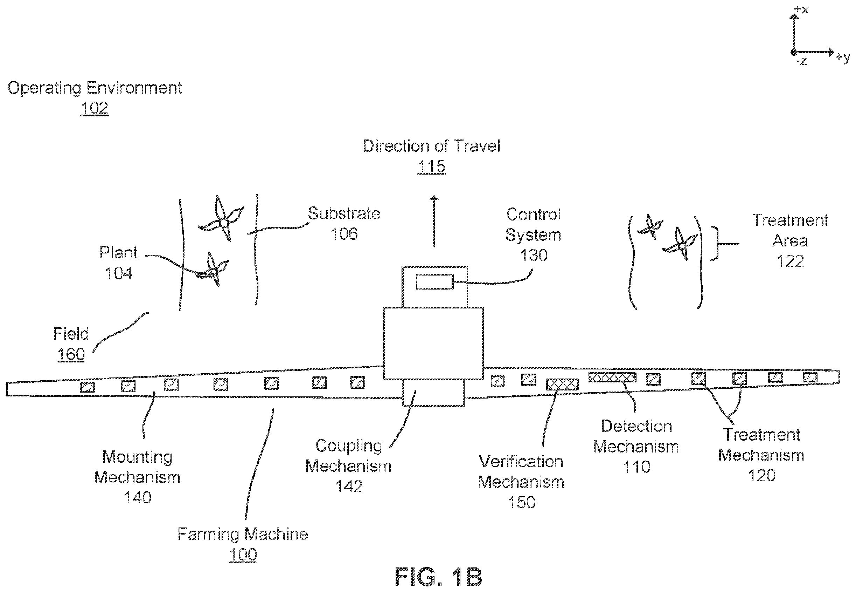

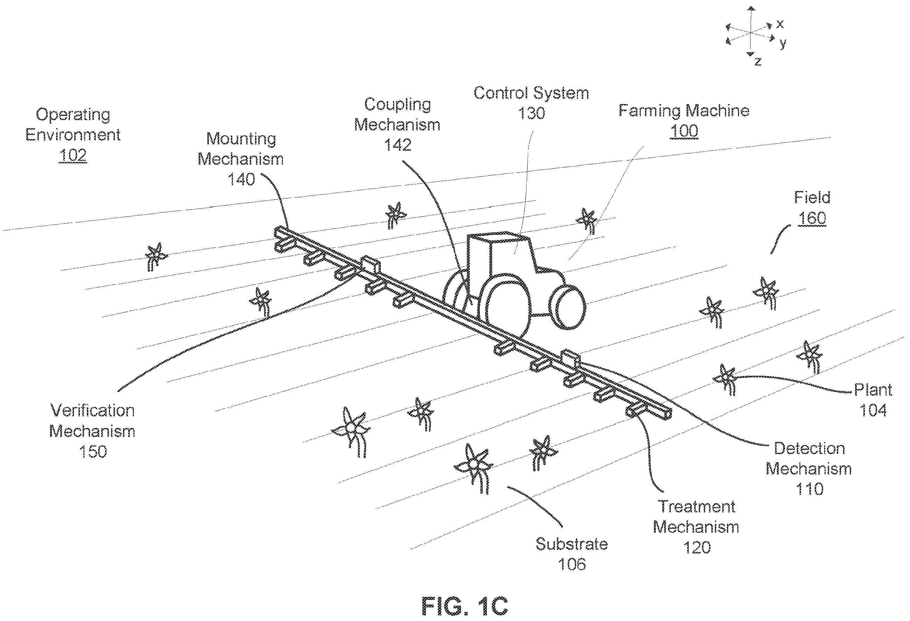

Embodiments relate to identifying a crop or plant identification model is incorrectly configured as a farming machine travels through a field and taking responsive actions to remedy the incorrectly configured plant identification model. FIGS. 1-2 describe general information related to example farming machines.

### II. FIELD MANAGEMENT AND TREATMENT PLANS

### Field Management

Agricultural managers ("managers") are responsible for managing farming operations in one or more fields. Managers work to implement a farming objective within those fields and select from among a variety of farming actions to implement that farming objective. Traditionally, managers are, for example, a farmer or agronomist that works the field but could also be other people and/or systems configured to manage farming operations within the field. For example, a manager could be an automated farming machine, a machine learned computer model, etc. In some cases, a manager may be a combination of the managers described above. For example, a manager may include a farmer assisted by a machine learned agronomy model and one or more automated farming machines or could be a farmer and an agronomist working in tandem.

Managers implement one or more farming objectives for a field. A farming objective is typically a macro-level goal for a field. For example, macro-level farming objectives may include treating crops with growth promotors, neutralizing weeds with growth regulators, harvesting a crop with the best possible crop yield, or any other suitable farming objective. However, farming objectives may also be a micro-level goal for the field. For example, micro-level farming objectives may include treating a particular plant in the field, repairing or correcting a part of a farming machine, requesting feedback from a manager, etc. Of course, there are many possible farming objectives and combinations of farming objectives, and the previously described examples are not intended to be limiting.

Faming objectives are accomplished by one or more farming machines performing a series of farming actions. Farming machines are described in greater detail below. Farming actions are any operation implementable by a farming machine within the field that works towards a farming objective. Consider, for example, a farming objective of harvesting a crop with the best possible yield. This farming objective requires a litany of farming actions, e.g., planting the field, fertilizing the plants 104, watering the plants 104, weeding the field, harvesting the plants 104, evaluating yield, etc. Similarly, each farming action pertaining to harvesting the crop may be a farming objective in and of itself. For instance, planting the field can require its own set of farming actions, e.g., preparing the soil, digging in the soil, planting a seed, etc.

In other words, managers implement a treatment plan in the field to accomplish a farming objective. A treatment plan is a hierarchical set of macro-level and/or micro-level objectives that accomplish the farming objective of the manager. Within a treatment plan, each macro or micro-objective may require a set of farming actions to accomplish, or each macro or micro-objective may be a farming action itself. So, to expand, the treatment plan is a temporally sequenced set of farming actions to apply to the field that the manager expects will accomplish the faming objective.

When executing a treatment plan in a field, the treatment plan itself and/or its constituent farming objectives and farming actions have various results. A result is a representation as to whether, or how well, a farming machine accomplished the treatment plan, farming objective, and/or farming action. A result may be a qualitative measure such as "accomplished" or "not accomplished," or may be a quantitative measure such as "40 pounds harvested," or "1.25 acres treated." Results can also be positive or negative, depending on the configuration of the farming machine or the implementation of the treatment plan. Moreover, results can be measured by sensors of the farming machine, input by managers, or accessed from a datastore or a network.

Traditionally, managers have leveraged their experience, expertise, and technical knowledge when implementing farming actions in a treatment plan. In a first example, a manager may spot check weed pressure in several areas of the field to determine when a field is ready for weeding. In a second example, a manager may refer to previous implementations of a treatment plan to determine the best time to begin planting a field. Finally, in a third example, a manager may rely on established best practices in determining a specific set of farming actions to perform in a treatment plan to accomplish a farming objective.

Leveraging manager and historical knowledge to make decisions for a treatment plan affects both spatial and temporal characteristics of a treatment plan. For instance, farming actions in a treatment plan have historically been applied to entire field rather than small portions of a field. To illustrate, when a manager decides to plant a crop, she plants the entire field instead of just a corner of the field having the best planting conditions; or, when the manager decides to weed a field, she weeds the entire field rather than just a few rows. Similarly, each farming action in the sequence of farming actions of a treatment plan are historically performed at approximately the same time. For example, when a manager decides to fertilize a field, she fertilizes the field at approximately the same time; or, when the manager decides to harvest the field, she does so at approximately the same time.

Notably though, farming machines have greatly advanced in their capabilities. For example, farming machines continue to become more autonomous, include an increasing number of sensors and measurement devices, employ higher amounts of processing power and connectivity, and implement various machine vision algorithms to enable managers to successfully implement a treatment plan.

Because of this increase in capability, managers are no longer limited to spatially and temporally monolithic implementations of farming actions in a treatment plan. Instead, managers may leverage advanced capabilities of farming machines to implement treatment plans that are highly localized and determined by real-time measurements in the field. In other words, rather than a manager applying a "best guess" treatment plan to an entire field, they can implement individualized and informed treatment plans for each plant in the field.

### III. FARMING MACHINE

### Overview

A farming machine that implements farming actions of a treatment plan may have a variety of configurations, some of which are described in greater detail below.

FIG. 1A is an isometric view of a farming machine 100 that performs farming actions of a treatment plan, according to one example embodiment, and FIG. 1B is a top view of the farming machine 100 in FIG. 1A. FIG. 1C is an isometric view of another farming machine 100 that performs farming actions of a treatment plan, in accordance with one example embodiment.

The farming machine 100 includes a detection mechanism 110, a treatment mechanism 120, and a control system 130. The farming machine 100 can additionally include a mounting mechanism 140, a verification mechanism 150, a power source, digital memory, communication apparatus, or any other suitable component that enables the farming machine 100 to implement farming actions in a treatment plan. Moreover, the described components and functions of the farming machine 100 are just examples, and a farming machine 100 can have different or additional components and functions other than those described below.

The farming machine 100 is configured to perform farming actions in a field 160, and the implemented farming actions are part of a treatment plan. To illustrate, the farming machine 100 implements a farming action which applies a treatment to one or more plants 104 and/or the substrate 106 within a geographic area. Here, the treatment farming actions are included in a treatment plan to regulate plant growth. As such, treatments are typically applied directly to a single plant 104, but can alternatively be directly applied to multiple plants 104, indirectly applied to one or more plants 104, applied to the environment 102 associated with the plant 104 (e.g., soil, atmosphere, or other suitable portion of the plant's environment adjacent to or connected by an environmental factors, such as wind), or otherwise applied to the plants 104.

In a particular example, the farming machine 100 is configured to implement a farming action which applies a treatment that necroses the entire plant 104 (e.g., weeding) or part of the plant 104 (e.g., pruning). In this case, the farming action can include dislodging the plant 104 from the supporting substrate 106, incinerating a portion of the plant 104 (e.g., with directed electromagnetic energy such as a laser), applying a treatment concentration of working fluid (e.g., fertilizer, hormone, water, etc.) to the plant 104, or treating the plant 104 in any other suitable manner.

In another example, the farming machine 100 is configured to implement a farming action which applies a treatment to regulate plant growth. Regulating plant growth can include promoting plant growth, promoting growth of a plant portion, hindering (e.g., retarding) plant 104 or plant portion growth, or otherwise controlling plant growth. Examples of regulating plant growth includes applying growth hormone to the plant 104, applying fertilizer to the plant 104 or substrate 106, applying a disease treatment or insect treatment to the plant 104, electrically stimulating the plant 104, watering the plant 104, pruning the plant 104, or otherwise treating the plant 104. Plant growth can additionally be regulated by pruning, necrosing, or otherwise treating the plants 104 adjacent to the plant 104. Operating Environment 102

The farming machine 100 operates in an operating environment 102. The operating environment 102 is the environment 102 surrounding the farming machine 100 while it implements farming actions of a treatment plan. The operating environment 102 may also include the farming machine 100 and its corresponding components itself.

The operating environment 102 typically includes a field 160, and the farming machine 100 generally implements farming actions of the treatment plan in the field 160. A field 160 is a geographic area where the farming machine 100 implements a treatment plan. The field 160 may be an outdoor plant field but could also be an indoor location that houses plants such as, e.g., a greenhouse, a laboratory, a grow house, a set of containers, or any other suitable environment 102.

A field 160 may include any number of field portions. A field portion is a subunit of a field 160. For example, a field portion may be a portion of the field 160 small enough to include a single plant 104, large enough to include many plants 104, or some other size. The farming machine 100 can execute different farming actions for different field portions. For example, the farming machine 100 may apply an herbicide for some field portions in the field 160, while applying a pesticide in another field portion. Moreover, a field 160 and a field portion are largely interchangeable in the context of the methods and systems described herein. That is, treatment plans and their corresponding farming actions may be applied to an entire field 160 or a field portion depending on the circumstances at play.

The operating environment 102 may also include plants 104. As such, farming actions the farming machine 100 implements as part of a treatment plan may be applied to plants 104 in the field 160. The plants 104 can be crops but could also be weeds or any other suitable plant 104. Some example crops include cotton, lettuce, soybeans, rice, carrots, tomatoes, corn, broccoli, cabbage, potatoes, wheat, or any other suitable commercial crop. The weeds may be grasses, broadleaf weeds, thistles, or any other suitable determinantal weed.

More generally, plants 104 may include a stem that is arranged superior to (e.g., above) the substrate 106 and a root system joined to the stem that is located inferior to the plane of the substrate 106 (e.g., below ground). The stem may support any branches, leaves, and/or fruits. The plant 104 can have a single stem, leaf, or fruit, multiple stems, leaves, or fruits, or any number of stems, leaves or fruits. The root system may be a tap root system or fibrous root system, and the root system may support the plant 104 position and absorb nutrients and water from the substrate 106. In various examples, the plant 104 may be a vascular plant 104, non-vascular plant 104, ligneous plant 104, herbaceous plant 104, or be any suitable type of plant 104.

Plants 104 in a field 160 may be grown in one or more plant 104 rows (e.g., plant 104 beds). The plant 104 rows are typically parallel to one another but do not have to be. Each plant 104 row is generally spaced between 2 inches and 45 inches apart when measured in a perpendicular direction from an axis representing the plant 104 row. Plant 104 rows can have wider or narrower spacings or could have variable spacing between multiple rows (e.g., a spacing of 12 in. between a first and a second row, a spacing of 16 in. a second and a third row, etc.).

Plants 104 within a field 160 may include the same type of crop (e.g., same genus, same species, etc.). For example, each field portion in a field 160 may include corn crops. However, the plants 104 within each field 160 may also include multiple crops (e.g., a first, a second crop, etc.). For example, some field portions may include lettuce crops while other field portions include pig weeds, or, in another example, some field portions may include beans while other field portions include corn. Additionally, a single field portion may include different types of crop. For example, a single field portion may include a soybean plant 104 and a grass weed.

The operating environment 102 may also include a substrate 106. As such, farming actions the farming machine 100 implements as part of a treatment plan may be applied to the substrate 106. The substrate 106 may be soil but can alternatively be a sponge or any other suitable substrate 106. The substrate 106 may include plants 104 or may not include plants 104 depending on its location in the field 160. For example, a portion of the substrate 106 may include a row of crops, while another portion of the substrate 106 between crop rows includes no plants 104.

### III.A Example Machine Configurations

### Detection mechanism(s)

The farming machine 100 may include a detection mechanism 110. The detection mechanism 110 identifies objects in the operating environment 102 of the farming machine 100. To do so, the detection mechanism 110 obtains information describing the environment 102 (e.g., sensor or image data), and processes that information to identify pertinent objects (e.g., plants 104, substrate 106, persons, etc.) in the operating environment 102. Identifying objects in the environment 102 further enables the farming machine 100 to implement farming actions in the field 160. For example, the detection mechanism 110 may capture an image of the field 160 and process the image with a plant treatment model that identifies plants 104 in the captured image. A plant treatment model may also determine farming actions to implement. The farming machine 100 then implements farming actions in the field 160 based on the output of the plant treatment model.

The farming machine 100 can include any number or type of detection mechanism 110 that may aid in determining and implementing farming actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment 102 surrounding the farming machine 100. For example, the detection mechanism 110 may include an array of cameras configured to capture an array of pictures representing the environment 102 surrounding the farming machine 100. The detection mechanism 110 may also be a sensor that measures a state of the farming machine 100. For example, the detection mechanism 110 may be a speed sensor, a heat sensor, or some other sensor that can monitor the state of a component of the farming machine 100. Additionally, the detection mechanism 110 may also be a sensor that measures components during implementation of a farming action. For example, the detection mechanism 110 may be a flow rate monitor, a grain harvesting sensor, a mechanical stress sensor etc. Whatever the case, the detection mechanism 110 senses information about the operating environment 102 (including the farming machine 100).

A detection mechanism 110 may be mounted at any point on the mounting mechanism 140. Depending on where the detection mechanism 110 is mounted relative to the treatment mechanism 120, one or the other may pass over a geographic area in the field 160 before the other. For example, the detection mechanism 110 may be positioned on the mounting mechanism 140 such that it traverses over a geographic location before the treatment mechanism 120 as the farming machine 100 moves through the field 160. In another examples, the detection mechanism 110 is positioned to the mounting mechanism 140 such that the two traverse over a geographic location at substantially the same time as the farming machine 100 moves through the filed. Similarly, the detection mechanism 110 may be positioned on the mounting mechanism 140 such that the treatment mechanism 120 traverses over a geographic location before the detection mechanism 110 as the farming machine 100 moves through the field 160. The detection mechanism 110 may be statically mounted to the mounting mechanism 140, or may be removably or dynamically coupled to the mounting mechanism 140. In other examples, the detection mechanism 110 may be mounted to some other surface of the farming machine 100 or may be incorporated into another component of the farming machine 100.

### Verification mechanism(s)

The farming machine 100 may include a verification mechanism 150. Generally, the verification mechanism 150 records a measurement of the operating environment 102 and the farming machine 100 may use the recorded measurement to verify or determine the extent of an implemented farming action (i.e., a result of the farming action).

To illustrate, consider an example where a farming machine 100 implements a farming action based on a measurement of the operating environment 102 by the detection mechanism 110. The verification mechanism 150 records a measurement of the same geographic area measured by the detection mechanism 110 and where farming machine 100 implemented the determined farming action. The farming machine 100 then processes the recorded measurement to determine the result of the farming action. For example, the verification mechanism 150 may record an image of the geographic region surrounding a plant 104 identified by the detection mechanism 110 and treated by a treatment mechanism 120. The farming machine 100 may apply a treatment detection algorithm to the recorded image to determine the result of the treatment applied to the plant 104.

Information recorded by the verification mechanism 150 can also be used to empirically determine operation parameters of the farming machine 100 that will obtain the desired effects of implemented farming actions (e.g., to calibrate the farming machine 100, to modify treatment plans, etc.). For instance, the farming machine 100 may apply a calibration detection algorithm to a measurement recorded by the farming machine 100. In this case, the farming machine 100 determines whether the actual effects of an implemented farming action are the same as its intended effects. If the effects of the implemented farming action are different than its intended effects, the farming machine 100 may perform a calibration process. The calibration process changes operation parameters of the farming machine 100 such that effects of future implemented farming actions are the same as their intended effects. To illustrate, consider the previous example where the farming machine 100 recorded an image of a treated plant 104. There, the farming machine 100 may apply a calibration algorithm to the recorded image to determine whether the treatment is appropriately calibrated (e.g., at its intended location in the operating environment 102). If the farming machine 100 determines that the farming machine 100 is not calibrated (e.g., the applied treatment is at an incorrect location), the farming machine 100 may calibrate itself such that future treatments are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the treatment mechanism 120 is positioned there between. In this configuration, the verification mechanism 150 traverses over a geographic location in the operating environment 102 after the treatment mechanism 120 and the detection mechanism 110. However, the mounting mechanism 140 can retain the relative positions of the system components in any other suitable configuration. In some configurations, the verification mechanism 150 can be included in other components of the farming machine 100.

The farming machine 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment 102 surrounding the farming machine 100. For example, the verification mechanism 150 may include an array of cameras configured to capture an array of pictures representing the operating environment 102.

### Treatment mechanism(s)

The farming machine 100 may include a treatment mechanism 120. The treatment mechanism 120 can implement farming actions in the operating environment 102 of a farming machine 100. For instance, a farming machine 100 may include a treatment mechanism 120 that applies a treatment to a plant 104, a substrate 106, or some other object in the operating environment 102. More generally, the farming machine 100 employs the treatment mechanism 120 to apply a treatment to a treatment area 122, and the treatment area 122 may include anything within the operating environment 102 (e.g., a plant 104 or the substrate 106). In other words, the treatment area 122 may be any portion of the operating environment 102.

When the treatment is a plant treatment, the treatment mechanism 120 applies a treatment to a plant 104 in the field 160. The treatment mechanism 120 may apply treatments to identified plants or non-identified plants. For example, the farming machine 100 may identify and treat a specific plant (e.g., plant 104) in the field 160. Alternatively, or additionally, the farming machine 100 may identify some other trigger that indicates a plant treatment and the treatment mechanism 120 may apply a plant treatment. Some example plant treatment mechanisms 120 include: one or more spray nozzles, one or more electromagnetic energy sources (e.g., a laser), one or more physical implements configured to manipulate plants, but other plant 104 treatment mechanisms 120 are also possible.

Additionally, when the treatment is a plant treatment, the effect of treating a plant 104 with a treatment mechanism 120 may include any of plant necrosis, plant growth stimulation, plant portion necrosis or removal, plant portion growth stimulation, or any other suitable treatment effect. Moreover, the treatment mechanism 120 can apply a treatment that dislodges a plant 104 from the substrate 106, severs a plant 104 or portion of a plant 104 (e.g., cutting), incinerates a plant 104 or portion of a plant 104, electrically stimulates a plant 104 or portion of a plant 104, fertilizes or promotes growth (e.g., with a growth hormone) of a plant 104, waters a plant 104, applies light or some other radiation to a plant 104, and/or injects one or more working fluids into the substrate 106 adjacent to a plant 104 (e.g., within a threshold distance from the plant). Other plant treatments are also possible. When applying a plant treatment, the treatment mechanisms 120 may be configured to spray a treatment product such as one or more of: an herbicide, a fungicide, insecticide, some other pesticide, or water.

When the treatment is a substrate treatment, the treatment mechanism 120 applies a treatment to some portion of the substrate 106 in the field 160. The treatment mechanism 120 may apply treatments to identified areas of the substrate 106, or non-identified areas of the substrate 106. For example, the farming machine 100 may identify and treat an area of substrate 106 in the field 160. Alternatively, or additionally, the farming machine 100 may identify some other trigger that indicates a substrate 106 treatment and the treatment mechanism 120 may apply a treatment to the substrate 106. Some example treatment mechanisms 120 configured for applying treatments to the substrate 106 include: one or more spray nozzles, one or more electromagnetic energy sources, one or more physical implements configured to manipulate the substrate 106, but other substrate 106 treatment mechanisms 120 are also possible.

Of course, the farming machine 100 is not limited to treatment mechanisms 120 for plants 104 and substrates 106. The farming machine 100 may include treatment mechanisms 120 for applying various other treatments to objects in the field 160. Depending on the configuration, the farming machine 100 may include various numbers of treatment mechanisms 120 (e.g., 1, 2, 5, 20, 60, etc.). A treatment mechanism 120 may be fixed (e.g., statically coupled) to the mounting mechanism 140 or attached to the farming machine 100. Alternatively, or additionally, a treatment mechanism 120 may movable (e.g., translatable, rotatable, etc.) on the farming machine 100. In one configuration, the farming machine 100 includes a single treatment mechanism 120. In this case, the treatment mechanism 120 may be actuatable to align the treatment mechanism 120 to a treatment area 122. In a second variation, the farming machine 100 includes a treatment mechanism 120 assembly comprising an array of treatment mechanisms 120. In this configuration, a treatment mechanism 120 may be a single treatment mechanism 120, a combination of treatment mechanisms 120, or the treatment mechanism 120 assembly. Thus, either a single treatment mechanism 120, a combination of treatment mechanisms 120, or the entire assembly may be selected to apply a treatment to a treatment area 122. Similarly, either the single, combination, or entire assembly may be actuated to align with a treatment area, as needed. In some configurations, the farming machine 100 may align a treatment mechanism 120 with an identified object in the operating environment 102. That is, the farming machine 100 may identify an object in the operating environment 102 and actuate the treatment mechanism 120 such that its treatment area aligns with the identified object.

A treatment mechanism 120 may be operable between a standby mode and a treatment mode. In the standby mode the treatment mechanism 120 does not apply a treatment, and in the treatment mode the treatment mechanism 120 is controlled by the control system 130 to apply the treatment. However, the treatment mechanism 120 can be operable in any other suitable number of operation modes.

### Control system(s)

The farming machine 100 includes a control system 130. The control system 130 controls operation of the various components and systems on the farming machine 100. For instance, the control system 130 can obtain information about the operating environment 102, processes that information to identify a farming action to implement (e.g., via a plant treatment model), and implement the identified farming action with system components of the farming machine 100.

The control system 130 can receive information from the detection mechanism 110, the verification mechanism 150, the treatment mechanism 120, and/or any other component or system of the farming machine 100. For example, the control system 130 may receive measurements from the detection mechanism 110 or verification mechanism 150, or information relating to the state of a treatment mechanism 120 or implemented farming actions from a verification mechanism 150. Other information is also possible.

Similarly, the control system 130 can provide input to the detection mechanism 110, the verification mechanism 150, and/or the treatment mechanism 120. For instance, the control system 130 may be configured input and control operating parameters of the farming machine 100 (e.g., speed, direction). Similarly, the control system 130 may be configured to input and control operating parameters of the detection mechanism 110 and/or verification mechanism 150. Operating parameters of the detection mechanism 110 and/or verification mechanism 150 may include processing time, location and/or angle of the detection mechanism 110, image capture intervals, image capture settings, etc. Other inputs are also possible. Finally, the control system may be configured to generate machine inputs for the treatment mechanism 120. That is, translating a farming action of a treatment plan into machine instructions implementable by the treatment mechanism 120.

The control system 130 can be operated by a user operating the farming machine 100, wholly or partially autonomously, operated by a user connected to the farming machine 100 by a network, or any combination of the above. For instance, the control system 130 may be operated by an agricultural manager sitting in a cabin of the farming machine 100, or the control system 130 may be operated by an agricultural manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the farming machine 100 and connected by a local area network. In another example, the control system 130 may be a series of computers implemented on the farming machine 100, in the cloud, a client device and connected by a wireless area network.

The control system 130 can apply one or more computer models to determine and implement farming actions in the field 160. For example, the control system 130 can apply a plant treatment model to images acquired by the detection mechanism 110 to determine and implement farming actions. The control system 130 may be coupled to the farming machine 100 such that an operator (e.g., a driver) can interact with the control system 130. In other embodiments, the control system 130 is physically removed from the farming machine 100 and communicates with system components (e.g., detection mechanism 110, treatment mechanism 120, etc.) wirelessly.

In some configurations, the farming machine 100 may additionally include a communication apparatus, which functions to communicate (e.g., send and/or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the farming machine 100 may include any number of additional components.

For instance, the farming machine 100 may include a mounting mechanism 140. The mounting mechanism 140 provides a mounting point for the components of the farming machine 100. That is, the mounting mechanism 140 may be a chassis or frame to which components of the farming machine 100 may be attached but could alternatively be any other suitable mounting mechanism 140. More generally, the mounting mechanism 140 statically retains and mechanically supports the positions of the detection mechanism 110, the treatment mechanism 120, and the verification mechanism 150. In an example configuration, the mounting mechanism 140 extends outward from a body of the farming machine 100 such that the mounting mechanism 140 is approximately perpendicular to the direction of travel 115. In some configurations, the mounting mechanism 140 may include an array of treatment mechanisms 120 positioned laterally along the mounting mechanism 140. In some configurations, the farming machine 100 may not include a mounting mechanism 140, the mounting mechanism 140 may be alternatively positioned, or the mounting mechanism 140 may be incorporated into any other component of the farming machine 100.

The farming machine 100 may include locomoting mechanisms. The locomoting mechanisms may include any number of wheels, continuous treads, articulating legs, or some other locomoting mechanism(s). For instance, the farming machine 100 may include a first set and a second set of coaxial wheels, or a first set and a second set of continuous treads. In the either example, the rotational axis of the first and second set of wheels/treads are approximately parallel. Further, each set is arranged along opposing sides of the farming machine 100. Typically, the locomoting mechanisms are attached to a drive mechanism that causes the locomoting mechanisms to translate the farming machine 100 through the operating environment 102. For instance, the farming machine 100 may include a drive train for rotating wheels or treads. In different configurations, the farming machine 100 may include any other suitable number or combination of locomoting mechanisms and drive mechanisms.

The farming machine 100 may also include one or more coupling mechanisms 142 (e.g., a hitch). The coupling mechanism 142 functions to removably or statically couple various components of the farming machine 100. For example, a coupling mechanism may attach a drive mechanism to a secondary component such that the secondary component is pulled behind the farming machine 100. In another example, a coupling mechanism may couple one or more treatment mechanisms 120 to the farming machine 100.

The farming machine 100 may additionally include a power source, which functions to power the system components, including the detection mechanism 110, control system 130, and treatment mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the farming machine 100.

### III.B System Environment

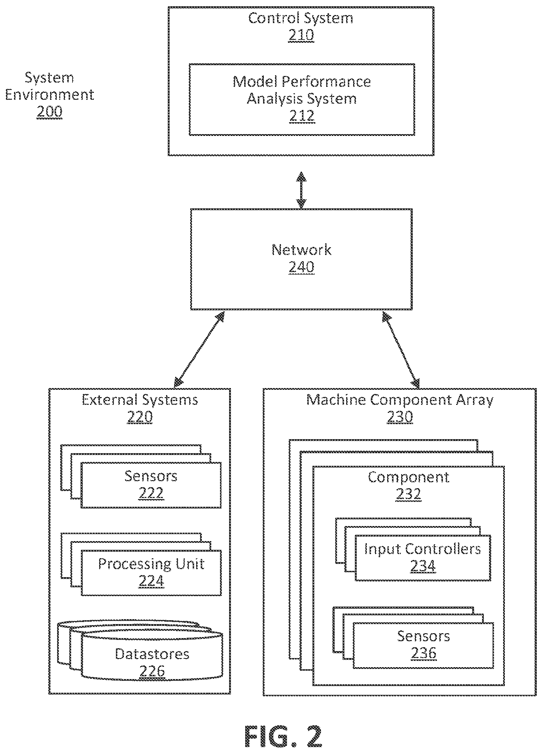

FIG. 2 is a block diagram of the system environment for the farming machine 100, in accordance with one or more example embodiments. In this example, the control system 210 (e.g., control system 130) is connected to external systems 220, a machine component array 230, and a client device 243 via a network 240 within the system environment 200.

The external systems 220 are any system that can generate data representing information useful for determining and implementing farming actions in a field. External systems 220 may include one or more sensors 222, one or more processing units 224, and one or more datastores 226. The one or more sensors 222 can measure the field 160, the operating environment 102, the farming machine 100, etc. and generate data representing those measurements. For instance, the sensors 222 may include a rainfall sensor, a wind sensor, heat sensor, a camera, etc. The processing units 2240 may process measured data to provide additional information that may aid in determining and implementing farming actions in the field. For instance, a processing unit 224 may access an image of a field 160 and calculate a weed pressure from the image or may access historical weather information for a field 160 to generate a forecast for the field. Datastores 226 store historical information regarding the farming machine 100, the operating environment 102, the field 160, etc. that may be beneficial in determining and implementing farming actions in the field. For instance, the datastore 226 may store results of previously implemented treatment plans and farming actions for a field 160, a nearby field, and or the region. The historical information may have been obtained from one or more farming machines (i.e., measuring the result of a farming action from a first farming machine with the sensors of a second farming machine). Further, the datastore 226 may store results of specific faming actions in the field 160, or results of farming actions taken in nearby fields having similar characteristics. The datastore 226 may also store historical weather, flooding, field use, planted crops, etc. for the field and the surrounding area. Finally, the datastores 226 may store any information measured by other components in the system environment 200.

The machine component array 230 includes one or more components 232. Components 232 are elements of the farming machine 100 that can take farming actions (e.g., a treatment mechanism 120). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 230 in response. A sensor 236 generates data representing measurements of the operating environment 102 and provides that data to other systems and components within the system environment 200. The measurements may be of a component 232, the farming machine 100, the operating environment 102, etc. For example, a sensor 236 may measure a configuration or state of the component 232 (e.g., a setting, parameter, power load, etc.), measure conditions in the operating environment 102 (e.g., moisture, temperature, etc.), capture information representing the operating environment 102 (e.g., images, depth information, distance information), and generate data representing the measurement(s).

The control system 210 receives information from external systems 220 and the machine component array 230 and implements a treatment plan in a field with a farming machine.

The client device 243 is one or more computing devices capable of receiving user input as well as transmitting and/or receiving data via the network 240. In one embodiment, a client device 243 is a conventional computer system, such as a desktop or a laptop computer. Alternatively, a client device 243 may be a device having computer functionality, such as a personal digital assistant (PDA), a mobile telephone, a smartphone, or another suitable device. A client device 243 is configured to communicate via the network 240. In one embodiment, a client device 243 executes an application allowing a user of the client device 243 to interact with the control system 210. For example, a client device 243 executes a browser application to enable interaction between the client device 243 and the control system 210 via the network 240. In another embodiment, a client device 243 interacts with the control system 210 through an application programming interface (API) running on a native operating system of the client device 243, such as IOS^{®} or ANDROID^{™}.

The network 250 connects nodes of the system environment 200 to allow microcontrollers and devices to communicate with each other. In some embodiments, the components are connected within the network as a Controller Area Network (CAN). In this case, within the network each element has an input and output connection, and the network 250 can translate information between the various elements. For example, the network 250 receives input information from the external systems 220 array and component array 230, processes the information, and transmits the information to the control system 210. The control system 210 generates a farming action based on the information and transmits instructions to implement the farming action to the appropriate component(s) 232 of the component array 230.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like. In some embodiments, the network 240 may comprise any combination of local area and/or wide area networks, using both wired and/or wireless communication systems. In one embodiment, the network 240 uses standard communications technologies and/or protocols.

### IV. ANALYSIS OF MODEL PERFORMANCE

As described above, the farming machine (e.g., farming machine 100) includes a control system (e.g., control system 210) configured to monitor the performance of a plant identification model to determine whether the plant identification model is appropriately configured to detect plants present in the field. For instance, the farming machine is configured to identify whether a plant identification model is configured to detect corn plants while the farming machine is operating in a corn field (e.g., "appropriately"), rather than configured to detect wheat plants when operating in a corn field (e.g., "inappropriately").

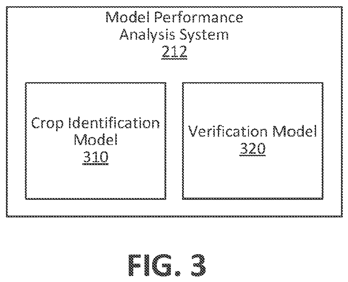

To enable this functionality, the control system includes a model performance analysis system 212 ("MPAS"). FIG. 3 illustrates a model performance analysis system, in accordance with an example embodiment. The MPAS 212 system includes a plant identification model 310 and a verification model 320. The MPAS 212 may include additional or fewer elements, and/or the functionality of various elements of the MPAS 212 may be combined or divided in a different manner. For instance, the plant identification model 310 and the verification model 320 may be the same model or may be different models. Additionally, the plant identification model 310 may include one or more plant identification models as described hereinbelow. Further, some or all of the functionality of the MPAS 212 may be distributed between one or more systems, or may be performed remotely.

At a high level, the MPAS 212 is a multi-layer performance evaluation system. The plant identification model 310 operates at the base level, continuously identifying plants in a field as the farming machine travels through the field. The verification model 320 operates at a level above the plant identification model 310, continuously evaluating the performance of the plant identification model 310 to determine whether the plant identification model 310 is appropriately (or inappropriately) configured to identify crops in the field.

### Plant identification model(s)

The MPAS 212 employs a plant identification model 310 to identify plants in images as the farming machine travels through a field. To expand, the MPAS 212 accesses an image from the system environment (e.g., environment 200), from, for example, a sensor 222 of an external system 220 or a sensor 236 of the machine component array 230 (e.g., detection mechanism 110). The accessed image includes pixels having latent information representing objects captured in the image. For instance, an accessed image of plants (e.g., a first type of crop, a second type of crop, and a weed) and a substrate in a field may include latent information representing the crop(s), weed(s), and substrate. The latent information may also include additional information about the imaged objects. For instance, the latent information may include the position of objects, class of objects, depth of objects, etc.

The MPAS 212 processes the image by applying the plant identification model 310 to the image to determine a position and a class of each plant in the image. That is, the MPAS 212 analyzes the latent information of the pixels in the image to determine the class of each plant in the image and the location of each plant in the image. There are several example models that can be used to classify plants in images, including their location, species, and/or type. For instance, the plant identification model 310 may be a pixel segmentation model (as disclosed in U.S. Patent No. 10,713,484), a plant localization or "bounding box" model (as disclosed in U.S. Patent No. 11,748,976), or a species identification model (as disclosed in U.S. Patent Application No. 11,580,718).

As the MPAS 212 processes images using the plant identification model 310, the plant identification model 310 may output various confidence metrics regarding the plant identification. In an example configuration, the plant identification model 310 may output a confidence that a particular set of pixels represent a plant. Similarly, in a configuration, the plant identification model 310 may output a confidence that a particular set of pixels represents a class of plant (e.g., corn, soybean, broadleaf weed, etc.). To illustrate, the plant identification model may identify that a set of pixels in an accessed image have a 90% probability of represent a corn plant.

In some situations, applying the plant identification model 310 to an image outputs confidence metrics for multiple classes. For instance, in a configuration, the plant identification model 310 may output a first confidence (or likelihood, or probability) that a particular set of pixels represent a first type of plant (e.g., corn) in an image, and may also output a second confidence that the same set of pixels represents a second type of plant (e.g., soybeans) in the image. To illustrate, in an example, the plant identification model 310 may output that a particular set of pixels has an 80% chance of representing a lettuce plant, while it has a 3% chance of representing a wheat plant. Of course, the plant identification model 310 is not limited to this process for only two classes of plant, and it may output probabilities for any number of classes (e.g., 1, 2, 3, 5, 10, etc.).

Additionally, the plant identification model 310 may be applied to an image to output an "aggregate class" represented in the image. For example, the plant identification model 310 may output that a first type of plant is the aggregate class for the image because the plant identification model 310 identifies one or more plants in the image are the first type of plant, or may output that a second type of plant is the aggregate class for the image because the plant identification model 310 identifies one or more plants in the image as the second type of plant.

In that regard, the plant identification model 310 may employ several methodologies to determine the aggregate class of identified plants in an accessed image. In an example, the plant identification model 310 may determine the aggregate class is the class having the most identified plants in the image. For example, if the plant identification model 310 identifies three plants of a first class, 10 plants of a second class, and 2 plants of a third class, the plant identification model 310 may identify the aggregate class is the second class (because there is the most). In another example, the plant identification model 310 may determine the aggregate class is the class having the most plant coverage in the image. For example, if the plant identification model identifies a first class of plant with 10% coverage in the image and a second class of plant with 60% coverage in the image, the plant identification model 310 may identify the aggregate class as the second class. In some examples, the plant identification model 310 may leverage the row line for identifying plants - e.g., increasing the likelihood that an identified plant is a plant of interest if it is in a plant row. Additionally, in some examples, the plant identification model 310 may leverage expert knowledge in identifying plants. For instance, in some fields, it is traditional to plant a first plant type after a second plant type in a field. As such, the plant identification model 310 may take into account the order in which plants are planted in the field in identifying plants. Other methods are also possible.

Additionally, in determining an aggregate class, the plant identification model 310 may also factor in the various confidence metrics. For instance, if a first class of plant is identified with high confidence (or likelihood, or probability), while a second class of plant is identified with a low confidence, the plant identification model 310 may determine the aggregate class is the first class of plant (even if, in some cases, there are more instances of the second plant).

The plant identification model 310 may output the aggregate class as a time series as it travels through the field (i.e., an "aggregate class stream"). For instance, the plant identification model 310 may output an aggregate class stream including the aggregate class for a series of images as, e.g., "soy, cotton, soy, soy, soy, cotton, soy, soy, soy, soy, cotton, cotton, etc." The time series may represent the aggregate class for each accessed image, from every other accessed image, at specific time intervals, or some other time series representation.

Therefore, on the whole, as the MPAS 212 applies the plant identification model 310 to accessed images as it travels through the field, the plant identification model 310 both (1) identifies individual plants, their class, and their location based on information in the image, and (2) determines an aggregate class for the image based on the individual plants identified in the image. In turn, the farming machine may use the information about the identified individual plants to treat those plants as it travels past them in the field, and the MPAS 212 may use the aggregate class to evaluate performance of the plant identification model 310 using the verification model 320.

### Verification Model

The MPAS 212 applies the verification model 320 to determine whether the plant identification model 310 is correctly configured based on the outputted aggregate class. For instance, if the plant identification model 310 is configured to identify soy plants and is continuously outputting an aggregate class of "corn plants," then the verification model 320 may determine the plant identification model 310 is incorrectly configured. Conversely, if the plant identification model 310 is configured to identify wheat plants and is continuously outputting (or nearly continuously outputting) an aggregate class of "wheat plants," then verification model 320 may determine the plant identification model 310 is correctly configured. Finally, in some cases, if the plant identification model 310 is configured to identify lettuce plants and is intermittently outputting an aggregate class of "lettuce plants," then the verification model 320 may, or may not, determine the plant identification model 310 is correctly configured (as described below).

Stated more contextually, the verification model 320 may determine whether (1) incorrect aggregate classes indicate the plant identification model 310 is incorrectly configured (e.g., configured to identify the wrong class of plant), (2) incorrect aggregate classes indicate that the plant identification model 310 is correctly configured but the determined aggregate class is invalid (e.g., misidentification of plants, noise, local hotspot, etc.), or (3) correct aggregate classes represent the plant identification model 310 is correctly configured.

Overall, the MPAS 212 employs the verification model 320 to determine whether the plant identification model 310 is correctly configured. To do so, the verification model 320 inputs an aggregate class stream and determines whether the plant identification model 310 producing the aggregate class stream is correctly configured. This verification model 320 may employ any number of methodologies to make this determination.

In a first methodology, the verification model 320 may determine whether the plant identification model 310 is correctly configured on a per image basis.

In a first example, the verification model 320 may make the determination based on a confidence metric of the aggregate class for the accessed image. For instance, the verification model 320 may determine the plant identification model 310 is correctly configured if a likelihood the aggregate class represents the class of plants in the image is above a threshold confidence.

In a second example, the verification model 320 may determine the plant identification model 310 is appropriately configurated based on whether the determined aggregate class matches the class the plant identification model 310 is configured to identify. For instance, the plant identification model 310 may be configured to identify and treat corn plants in the field. In this case, the verification model 320 may determine the plant identification model 310 is inappropriately configured if the determined aggregate class is different from corn plants.

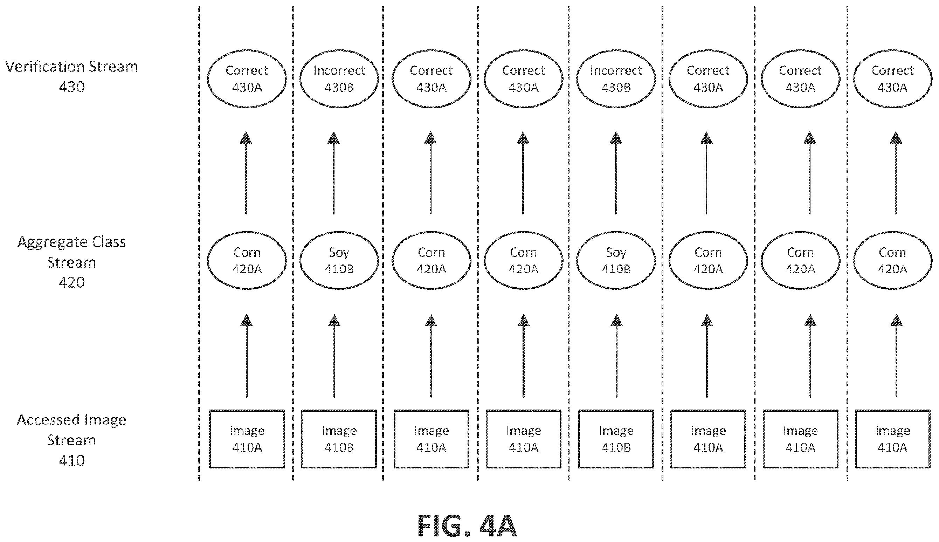

This methodology is illustrated in FIG. 4A. That is, FIG. 4A illustrates a first example implementation of a verification model, in accordance with an example embodiment.

In FIG. 4A, the farming machine (e.g., farming machine 100) is capturing a series of images as it travels through the field. The farming machine is configured to treat corn in a field and, as such, the plant identification model 310 is configured to identify and treat corn plants. The MPAS 212 accesses the series of captured images (the "accessed image stream" 410). The accessed image stream 410 includes images including corn plants (Image 410A) and images including soy plants (Image 410B).

The MPAS 212 applies the plant identification model 310 to each image. As described above, the plant identification model 310 determines and aggregate class for each image as part of an aggregate class stream 420. The aggregate class stream 420 includes the determined aggregate class for each image, including the aggregate class of "corn" for images including corn plants and "soy" for images including soy plants.

The MPAS 212 applies the verification model 320 to the aggregate class stream 420 to determine whether the plant identification model 310 is appropriately configured as part of a verification stream 430. In this example, the verification model 320 (1) employs the first methodology of inputting the aggregate classes of only the current image, and (2) determines the plant identification model 310 is incorrectly configured if the aggregate class for the image does not match the configured identification class. So, the verification model 320 determines the plant identification model 310 is correctly configured (Correct 430A) when the aggregate class is "Corn," and determines the plant identification model 310 is incorrectly configured ("Incorrect 430B") when the aggregate class is "Soy".

In a second methodology, the verification model 320 may determine whether the plant identification model 310 is correctly configured based on the current aggregate class and one or more previous aggregate classes.

This methodology overcomes some of the drawbacks that occur when verifying on a per image basis. As an example, one drawback is that a single image which indicates the plant identification model 310 is incorrectly configured may trigger the verification model 320 to take a responsive action (as described below). While this may be the appropriate course of action in some cases, it may not be in other cases. For example, the single image may (1) be a noise fluctuation in the model resulting from, e.g., dust or other detrimental conditions, (2) result from a localized area with a high number of the "incorrect" class of plants, (3) incorrect sensitivity or specificity settings, etc. In one or more of these examples, a responsive action may not be necessary.

Thus, the verification model 320 may use the current aggregate class and one or more previous aggregate classes to determine whether the plant identification model 310 is appropriately configured. In a configuration, the verification model 320 may input a sequence of K aggregate class determinations from the plant identification model 310 in making the determination. For instance, where K = 3, the verification model 320 input the aggregate class from the current image and the previous two images. In this case, the verification model 320 may determine the plant identification model 310 is appropriately configured if the plant identification model 310 does not produce more than one "incorrect" output out of the three. In some configurations, the verification model 320 may apply a smoothing function to the output of the plant identification model 310 in making the determination. Of course, other examples are also possible.

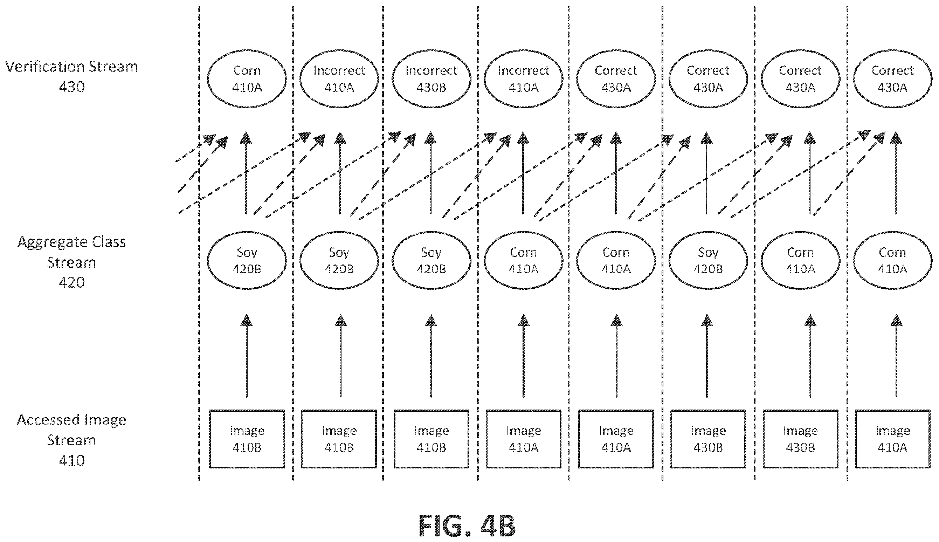

This methodology is illustrated in FIG. 4B. That is, FIG. 4B illustrates a second example implementation of a verification model, in accordance with an example embodiment.

In FIG. 4B, the farming machine is capturing a series of images as it travels through the field. The farming machine is configured to treat corn in a field and, as such, the plant identification model 310 is configured to identify and treat corn plants as the farming machine travels past those plants in the field. The MPAS 212 accesses the series of images (the "accessed image stream" 410). The accessed image stream 410 includes images including corn plants (Image 410A) and images including soy plants (Image 410B).

The MPAS 212 applies the plant identification model 310 to each image. As described above, the plant identification model 310 determines and aggregate class for each image as part of an aggregate class stream 420. The aggregate class stream 420 includes the determined aggregate class for each image. As illustrated, the aggregate class stream includes "corn" for images including corn plants and "soy" for images including soy plants.

The MPAS 212 applies the verification model 320 to the aggregate class stream 420 to determine whether the plant identification model 310 is appropriately configured to form a verification stream 430. In this example, the verification model 320 (1) employs the second methodology of inputting the aggregate classes of the current image and the two previous images, and (2) determines the plant identification model is incorrectly configured if the aggregate class for the three images does not match the identification class. So, the verification model 320 determines the plant identification model 310 is correctly configured (Correct 430A) when the aggregate class is "Corn" for two or three of the input aggregate classes, and determines the plant identification model 310 is incorrectly configured ("Incorrect 430B") when the aggregate class is "Soy" for two or three of the input aggregate classes.

### Responsive Actions

The control system 210 may take various actions based on the various functions of the MPAS 212. For example, the control system 210 may take actions (e.g., farming actions) based on whether the MPAS 212 determines the plant identification model 310 is correctly configured or incorrectly configured (e.g., using the verification model 320).

In cases where the MPAS 212 determines the output of the verification model 320 indicates the plant identification model 310 is correctly configured, the control system 210 may proceed with farming actions triggered by the plant identification model 310. For instance, the control system 210 may treat plants identified in accessed images using one or more treatment mechanisms. Similarly, the control system 210 may continue to take farming actions according to the treatment plan implemented by the manager of the farming machine (or field where the farming machine operates).

However, in cases where the MPAS 212 determines output of the verification model 320 indicates the plant identification model 310 is incorrectly configured, the control system 210 may take different actions. For instance, the control system 210 may forego treating plants identified in accessed images (because the model is not configured to identify the correct plants for treatment and/or the farming machine may be incorrectly configured to treat the identified plants). Similarly, the control system 210 may forego proceeding with farming actions and/or a treatment plan because the plant identification model 310 is incorrectly configured.

In some instances, the control system 210 may cause the MPAS 212 to modify parameters of the identification model 310 such that it becomes correctly configured (rather than incorrectly configured). To do so, the MPAS 212 may change the identification parameters of the identification model 310 to identify a different class of plant. That is, the MPAS 212 may cause the identification model 310 to identify a second class of plant for treatment rather than a first class of plant for treatment.

Similarly, the control system 210 may send a notification to an operator of the farming machine (and/or the manager) indicating that the verification model 320 has determined the plant identification model 310 is incorrectly configured (the notification may include the relative confidences). Based on the notification, the operator (or the manager) of the farming machine may elect to continue on the current course of action or modify the course of action. For instance, the operator may elect to continue a treatment plan despite receiving an indication the plant identification model is incorrectly configured (e.g., when the operator is making a turn at the end of a row), or the operator may elect to modify the parameters of the plant identification model such that it is appropriately configured (e.g., changing between corn and lettuce).

### VI. EXAMPLE IMPLEMENTATIONS

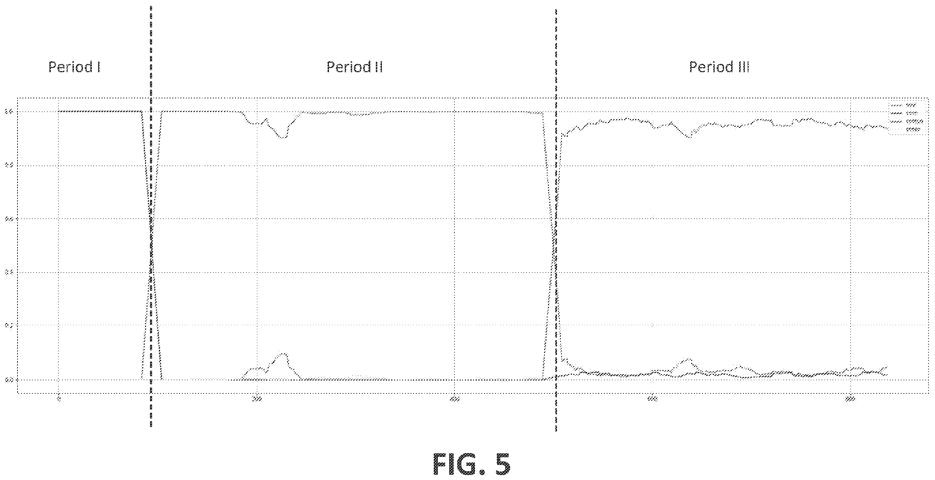

FIG. 5 illustrates an example of a control system autonomously configuring a plant identification model using an MPAS as a farming machine travels through a field, in accordance with an example embodiment. The field includes a portion including corn plants, a portion including soy plants, and a portion including cotton plants (in that order). All the portions also include several weeds. The farming machine (e.g., farming machine 100) is configured to perform farming actions on soy plants and cotton plants but is not configured to perform farming actions on corn plants and weeds (e.g., spraying a growth promoter). The MPAS (e.g., MPAS 212) includes a plant identification model (e.g., plant identification model 310) configured to identify soy plants, corn plants, cotton plants, and weeds. The MPAS also includes a verification model (e.g., verification model 320) configured to determine whether the plant identification model is appropriately configured.

In FIG. 5, the x-axis represents time, and the y-axis represents a confidence level for an identified class. The figure includes four lines - one for each of soy plants, corn plants, cotton plants, and weeds. As the farming machine travels through the field over time, the plant identification model outputs a confidence each class is the aggregate class in the image. Thus, the graph shows the determined aggregate class over time (e.g., the highest value) as the farming machine travels through the field.

To expand further, the figure illustrates identification of an aggregate class as it moves through the field. In the illustrated example, the farming machine travels sequentially through field portions - first traveling through the portion including corn plants in "Period 1," then the portion including soy plants in "Period 2," and finally the portion including cotton plants in "Period3." At the onset, the control system (e.g., control system 210) of the farming machine configures the plant identification model to identify Cotton Plants and perform farming actions on those cotton plants. In an example, the control system configures the farming machine to identify Cotton Plants in response to receiving instructions from an operator or manager to configure the plant identification model to identify Cotton Plants (e.g., via a network).

While the farming machine is travelling through the field portion including corn plants in Period 1, the MPAS determines the aggregate class is Corn Plants. Because the aggregate class is Corn Plants and the plant identification model is configured to identify Cotton Plants, the verification model determines the plant identification model is incorrectly configured. However, in this case, the MPAS takes no action to modify the configuration of the plant identification model because the farming machine is not configured to perform farming actions on corn plants.

While the farming machine is travelling through the field portion including soy plants in Period 2, the MPAS determines the aggregate class is Soy Plants. Because the aggregate class is Soy Plants and the plant identification model is configured to identify Cotton Plants, the verification model determines the plant identification model is incorrectly configured. In this case, the MPAS autonomously modifies the configuration of the plant identification model to identify Soy Plants. As such, the farming machine then travels through the field portion including soy plants identifying and performing farming actions on those soy plants.

While the farming machine is travelling through the field portion including cotton plants in Period 3, the MPAS determines the aggregate class is Cotton Plants. Because the aggregate class is Cotton Plants and the plant identification model is configured to identify Corn Plants (as happened in Period 2), the verification model determines the plant identification model is incorrectly configured. In this case, the MPAS sends a notification to the operator that the plant identification model is incorrectly configured and receives instructions from the operator to modify the configuration of the plant identification model to identify Corn Plants. As such, the farming machine then travels through the field portion including corn plants identifying and performing farming actions on those soy plants.

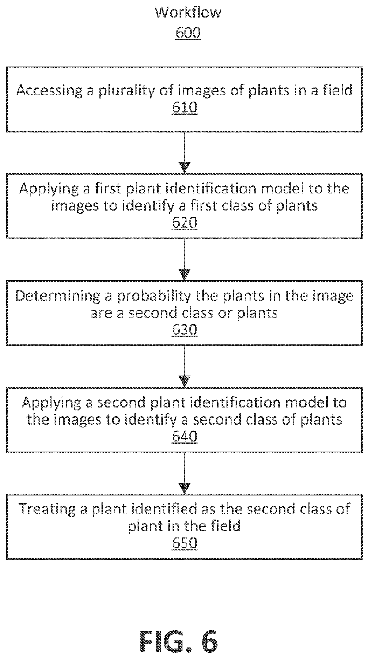

FIG. 6 illustrates an example workflow diagram for identifying a plant identification model of a farming machine is incorrectly configured, in accordance with an example embodiment. The workflow 600 may include additional or fewer steps or the steps may occur in an order different than that illustrated. Additionally, one or more of the steps in the workflow may be repeated or omitted.

In the illustrated workflow 600, a farming machine (e.g., farming machine 100) is travelling through the field treating plants. The farming machine includes a control system (e.g., control system 210) executing a first plant identification model configured to identify a first class of plant, and a second plant identification model configured to identify a second class of plant. In some configurations, the first plant identification model and the second plant identification model may be a single plant identification model configured to identify both the first class of plant and the second class of plant (e.g., plant identification model 310). Additionally, the control system is executing a verification model (e.g., verification model 320) configured to determine if the farming machine is incorrectly configured - e.g., by determining the farming machine is travelling through a field portion including the second class of plant but is configured to identify and treat the first class of plant using the first plant identification model.

In the workflow 600, the farming machine travels through the field capturing images of plants (e.g., using detection mechanism 110). The field includes the second class of plants. However, at the onset the farming machine is configured to identify and treat the first class of plant using the first plant identification model.

The control system of the farming machine accesses 610 images of the plants as it travels through the field. The images include the second class of plants.

The control system applies 620 the first plant identification model to the images to identify plants of the first class in the image. As described above, in doing so, the first plant identification model may output probabilities (or confidences, or likelihoods) that each plant in the image is the first class of plant and/or may output a probability (or confidence, or likelihood) the first class of plant is the aggregate class represented in the image. Simultaneously, the control system may apply the second plant identification model to the images to identify plants of the second class in the image. Similarly, the second plant identification model may output probabilities that each plant in the image is the second class of plant and/or may output a probability the second class of plant is the aggregate class represented in the image.

The control system determines 630 a probability that the plants in the field are the second class of plants. To do so, the control system applies the verification model to the output of the first plant identification model. The control system may determine the plants in the field are the second class of plants if (1) the likelihoods of identified plants being the first class of plant are below a threshold, (2) the likelihood the aggregate class of the image is the first class is below a threshold, (3) the likelihoods of identified plants being the second class of plant are above a threshold, (4) the likelihood the aggregate class of the image is the second class is above a threshold, (5) the likelihoods of identified plants being the second class is above the likelihoods of identified plants being the first class, or (6) the likelihood the aggregate class of the image is the second class is above the likelihood the aggregate class of the image is the first class. In this example, the control system determines the plants in the field are the second class of plants (rather than the first class of plants) because the likelihood the aggregate class of the image is the second class of plant is higher than the likelihood the aggregate class of the image is the first class of plant.

Based on the determination, the control system applies 640 the second plant identification model to the images to identify plants of the second class in the image. That is, because the verification model determines the farming machine is incorrectly configured (because it is identifying the first class of plant in a field including the second class of plant) and reconfigured the farming machine to identify and treat the second class of plants using the second plant identification model.

The farming machine treats 650 one or more plants identified as the second class of plants as it travels through the field. That is, the farming machine treats a plant identified as the second class of plant due to the determined likelihood the plant in the image is the second class of plant.

### Additional Considerations

In some configurations, the workflow can be used to identify additional agronomic parameters. For example, consider a farming machine configured to identify a first type of plant. In this case, the farming machine may be configured to identify all other plant matter that is not the first type of plant as a weed. As such, the plant identification model may then look to the number of identified plants that are not the first type of identified plant and determine if the image or the field is, e.g., "too weedy." For instance, the plant identification model may determine that there are too many weed pixels (e.g., plant matter that is not the first type of plant) in the image (e.g., relative to a threshold.

### V. CONTROL SYSTEM

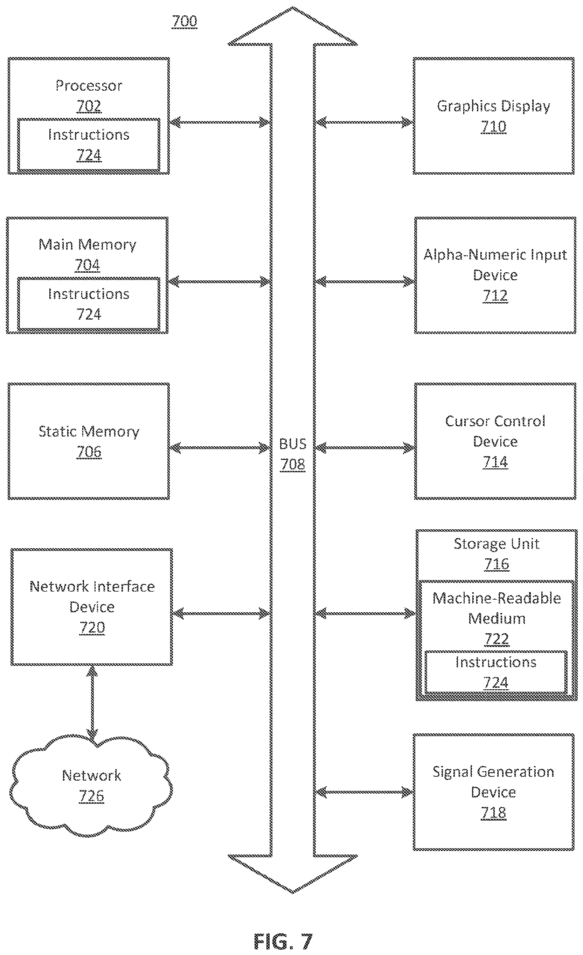

FIG. 7 is a block diagram illustrating components of an example machine for reading and executing instructions from a machine-readable medium. Specifically, FIG. 6 shows a diagrammatic representation of control system 130 in the example form of a computer system 700. The computer system 700 can be used to execute instructions 724 (e.g., program code or software) for causing the machine to perform any one or more of the methodologies (or processes) described herein. In alternative embodiments, the machine operates as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 724 (sequential or otherwise) that specify actions to be taken by that machine. Further, while only a single machine is illustrated, the term "machine" shall also be taken to include any collection of machines that individually or jointly execute instructions 724 to perform any one or more of the methodologies discussed herein.

The example computer system 700 includes one or more processing units (generally processor 702). The processor 702 is, for example, one or more central processing units (CPUs), one or more graphics processing units (GPUs), one or more digital signal processors (DSPs), one or more controllers, one or more state machines, one or more application specific integrated circuits (ASICs), one or more radio-frequency integrated circuits (RFICs), or any combination of these. The computer system 700 also includes a main memory 704. The computer system may include a storage unit 716. The processor 702, memory 704, and the storage unit 716 communicate via a bus 708.

In addition, the computer system 700 can include a static memory 706, a graphics display 710 (e.g., to drive a plasma display panel (PDP), a liquid crystal display (LCD), or a projector). The computer system 700 may also include alphanumeric input device 712 (e.g., a keyboard), a cursor control device 714 (e.g., a mouse, a trackball, a joystick, a motion sensor, or other pointing instrument), a signal generation device 718 (e.g., a speaker), and a network interface device 720, which also are configured to communicate via the bus 708.

The storage unit 716 includes a machine-readable medium 722 on which is stored instructions 724 (e.g., software) embodying any one or more of the methodologies or functions described herein. For example, the instructions 724 may include the functionalities of modules of the system 130 described in FIG. 2. The instructions 724 may also reside, completely or at least partially, within the main memory 704 or within the processor 702 (e.g., within a processor's cache memory) during execution thereof by the computer system 700, the main memory 704 and the processor 702 also constituting machine-readable media. The instructions 724 may be transmitted or received over a network 726 (e.g., network 240) via the network interface device 720.

### VI. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. Furthermore, it has also proven convenient at times, to refer to arrangements of operations as modules, without loss of generality. The described operations and their associated modules may be embodied in software, firmware, hardware, or any combinations thereof.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer. This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, readonly memories (ROMs), random access memories (RAMs), EPROMs, EEPROMs, magnetic or optical cards, or any type of non-transitory computer readable storage medium suitable for storing electronic instructions.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still cooperate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of "a" or "an" are employed to describe elements and components of the embodiments herein. This is done merely for convenience and to give a general sense of the system. This description should be read to include one or at least one and the singular also includes the plural unless it is obvious that it is meant otherwise..

## Claims

1. A method for treating plants (104) in a field (160), the method comprising:
accessing (610) a plurality of images of plants in the field as a farming machine (100) travels through the field treating the plants;
applying (620), to the plurality of images, a first plant identification model (310) configured to identify a first class of plant (410B) in the images, the first plant identification model (310) identifying plants as the first class of plant by determining first likelihoods that the plants are the first class of plant;
determining (630), based on the determined first likelihoods that the plants are the first class of plant, a probability that plants in the field are a second class of plant (420A);
applying (640) a second plant identification model (310) configured to identify the second class of plant in the plurality of images, the second plant identification model (310) identifying plants as the second class of plant by determining second likelihoods that the plants are the second class of plant; and
treating (650), with the farming machine, a plant identified as the second class of plant based on the determined second likelihood that the plant is the second class of plant;
**characterised in that**
the method determines (630) the probability, that plants in the field are the second class of plant, by applying a verification model (320) to the output of the first plant identification model (310); and **in that** the method applies (640) the second plant identification model (310) based on a determination that the plants are the second class of plants.

2. The method of claim 1, wherein the first plant identification model and the second plant identification model are a single plant identification model configured to identify both the first class of plant and the second class of plant.

3. The method of claim 1, wherein applying, based on the determination, the second plant identification model (310) to the plurality of images comprises reconfiguring one or more parameters of the first plant identification model (310) and applying the reconfigured first plant identification model (310) to the plurality of images as the second plant identification model (310).

4. The method of claim 1, wherein applying the first plant identification model to the plurality of images comprises receiving, from an operator of the farming machine, an instruction to identify first class of plants in the field.

5. The method of claim 1, wherein determining a probability that the plants in the field are a second class of plants comprises:
for each image in the plurality of images,
determining a first likelihood the image comprises plants of the first class of plant, and
calculating the probability the plants in the field are the second class based on one or more determined first likelihoods for one or more previous images in the plurality of images.

6. The method of claim 5, wherein calculating the probability the plants in the field are the second class comprises applying a smoothing function to the one or more determined first likelihoods for the one or more previous images.

7. The method of claim 1, further comprising:
determining, based on the determined second likelihoods the plants are the second class of plant, an additional probability that plants in the field are a third class of plant;
applying, based on the probability, a third plant identification model configured to identify the third class of plant to the plurality of images, the third plant identification model identifying plants as the third class of plant by determining third likelihoods the plants are the third class of plant; and
treating, with the farming machine, a different plant identified as the third class of plant based on the determined third likelihood the plant is the third class of plants.

8. The method of claim 7, wherein the first plant identification model, the second plant identification model, and the third plant identification model are a single plant identification model configured to identify the first class of plant, the second class of plant, and the third class of plant.

9. The method of claim 1, wherein applying, based on the determination, the second plant identification model configured to identify the second class of plant to the plurality of images comprises:
transmitting, to an operator of the farming machine, a notification comprising the determined probability that plants in the field are the second class of plant; and
receiving, from the operator of the farming machine, an instruction to identify plants of the second class of plants in the field.

10. The method of claim 1, wherein applying the second plant identification model configured to identify the second class of plant to the plurality of images occurs autonomously responsive to the determined probability that plants in the field are a second class of plant being above a threshold probability.

11. A farming machine (100) comprising:
an image acquisition system (110) configured to capture images of plants (104) in a field (160) as the farming machine traverses past the plants in the field;
a plurality of treatment mechanisms (120) configured to treat identified plants in the field
one or more processors (702); and
a non-transitory computer readable storage medium (722) storing computer program instructions (724) that, when executed by the one or more processors, cause the farming machine to perform the method according to one of claims 1 to 10.

## Patentansprüche

1. Verfahren zum Behandeln von Pflanzen (104) auf einem Feld (160), wobei das Verfahren Folgendes umfasst:
Zugreifen (610) auf mehrere Bilder von Pflanzen auf dem Feld, während eine landwirtschaftliche Maschine (100) durch das Feld fährt, die die Pflanzen behandelt;
Anwenden (620), auf die mehreren Bilder, eines ersten Pflanzenidentifikationsmodells (310), das dazu ausgelegt ist, eine erste Pflanzenklasse (410B) in den Bildern zu identifizieren, wobei das erste Pflanzenidentifikationsmodell (310) Pflanzen als die erste Pflanzenklasse identifiziert, indem erste Wahrscheinlichkeiten bestimmt werden, dass die Pflanzen die erste Pflanzenklasse sind;
Bestimmen (630), basierend auf den bestimmten ersten Wahrscheinlichkeiten, dass die Pflanzen die erste Pflanzenklasse sind, einer Wahrscheinlichkeit, dass Pflanzen auf dem Feld eine zweite Pflanzenklasse (420A) sind;
Anwenden (640) eines zweiten Pflanzenidentifikationsmodells (310), das dazu ausgelegt ist, die zweite Pflanzenklasse zu identifizieren, auf die mehreren Bilder, wobei das zweite Pflanzenidentifikationsmodell (310) Pflanzen als die zweite Pflanzenklasse identifiziert, indem zweite Wahrscheinlichkeiten bestimmt werden, dass die Pflanzen die zweite Pflanzenklasse sind; und
Behandeln (650), mit der landwirtschaftlichen Maschine, einer Pflanze, die als die zweite Pflanzenklasse identifiziert wird, basierend auf der bestimmten zweiten Wahrscheinlichkeit, dass die Pflanze die zweite Pflanzenklasse ist;
**dadurch gekennzeichnet, dass** das Verfahren die Wahrscheinlichkeit bestimmt (630), dass Pflanzen auf dem Feld die zweite Pflanzenklasse sind, indem ein Verifikationsmodell (320) auf die Ausgabe des ersten Pflanzenidentifikationsmodells (310) angewendet wird;
und dass das Verfahren das zweite Pflanzenidentifikationsmodell (310) basierend auf einer Bestimmung, dass die Pflanzen die zweite Pflanzenklasse sind, anwendet (640).

2. Verfahren nach Anspruch 1, wobei das erste Pflanzenidentifikationsmodell und das zweite Pflanzenidentifikationsmodell ein einzelnes Pflanzenidentifikationsmodell sind, das dazu ausgelegt ist, sowohl die erste Pflanzenklasse als auch die zweite Pflanzenklasse zu identifizieren.

3. Verfahren nach Anspruch 1, wobei das Anwenden, basierend auf der Bestimmung, des zweiten Pflanzenidentifikationsmodells (310) auf die mehreren Bilder das Rekonfigurieren eines oder mehrerer Parameter des ersten Pflanzenidentifikationsmodells (310) und das Anwenden des rekonfigurierten ersten Pflanzenidentifikationsmodells (310) auf die mehreren Bilder als das zweite Pflanzenidentifikationsmodell (310) umfasst.

4. Verfahren nach Anspruch 1, wobei das Anwenden des ersten Pflanzenidentifikationsmodells auf die mehreren Bilder das Empfangen, von einem Bediener der landwirtschaftlichen Maschine, einer Anweisung zum Identifizieren einer ersten Pflanzenklasse auf dem Feld umfasst.

5. Verfahren nach Anspruch 1, wobei das Bestimmen einer Wahrscheinlichkeit, dass die Pflanzen in dem Feld eine zweite Pflanzenklasse sind, Folgendes umfasst:
für jedes Bild in den mehreren Bildern,
Bestimmen einer ersten Wahrscheinlichkeit, dass das Bild Pflanzen der ersten Pflanzenklasse umfasst, und
Berechnen der Wahrscheinlichkeit, dass die Pflanzen in dem Feld die zweite Klasse sind, basierend auf einer oder mehreren bestimmten ersten Wahrscheinlichkeiten für ein oder mehrere vorherige Bilder in den mehreren Bildern.

6. Verfahren nach Anspruch 5, wobei das Berechnen der Wahrscheinlichkeit, dass die Pflanzen in dem Feld die zweite Klasse sind, Anwenden einer Glättungsfunktion auf die eine oder die mehreren bestimmten ersten Wahrscheinlichkeiten für das eine oder die mehreren vorherigen Bilder umfasst.

7. Verfahren nach Anspruch 1, das ferner Folgendes umfasst:
Bestimmen, basierend auf den bestimmten zweiten Wahrscheinlichkeiten, dass die Pflanzen die zweite Pflanzenklasse sind, einer zusätzlichen Wahrscheinlichkeit, dass Pflanzen in dem Feld eine dritte Pflanzenklasse sind;
Anwenden, basierend auf der Wahrscheinlichkeit, eines dritten Pflanzenidentifikationsmodells, das dazu ausgelegt ist, die dritte Pflanzenklasse zu identifizieren, auf die mehreren Bilder, wobei das dritte Pflanzenidentifikationsmodell Pflanzen als die dritte Pflanzenklasse identifiziert, indem dritte Wahrscheinlichkeiten bestimmt werden, dass die Pflanzen die dritte Pflanzenklasse sind; und
Behandeln, mit der landwirtschaftlichen Maschine, einer anderen Pflanze, die als die dritte Pflanzenklasse identifiziert wurde, basierend auf der bestimmten dritten Wahrscheinlichkeit, dass die Pflanze die dritte Pflanzenklasse ist.

8. Verfahren nach Anspruch 7, wobei das erste Pflanzenidentifikationsmodell, das zweite Pflanzenidentifikationsmodell und das dritte Pflanzenidentifikationsmodell ein einzelnes Pflanzenidentifikationsmodell sind, das dazu ausgelegt ist, die erste Pflanzenklasse, die zweite Pflanzenklasse und die dritte Pflanzenklasse zu identifizieren.

9. Verfahren nach Anspruch 1, wobei das Anwenden, basierend auf der Bestimmung, des zweiten Pflanzenidentifikationsmodells, das dazu ausgelegt ist, die zweite Pflanzenklasse zu identifizieren, auf die mehreren Bilder Folgendes umfasst:
Senden, an einen Bediener der landwirtschaftlichen Maschine, einer Benachrichtigung, die die bestimmte Wahrscheinlichkeit umfasst, dass Pflanzen auf dem Feld die zweite Pflanzenklasse sind; und
Empfangen, vom Bediener der landwirtschaftlichen Maschine, einer Anweisung, Pflanzen der zweiten Pflanzenklasse auf dem Feld zu identifizieren.

10. Verfahren nach Anspruch 1, wobei das Anwenden des zweiten Pflanzenidentifikationsmodells, das dazu ausgelegt ist, die zweite Pflanzenklasse zu identifizieren, auf die mehreren Bilder autonom als Reaktion darauf erfolgt, dass die bestimmte Wahrscheinlichkeit, dass Pflanzen in dem Feld eine zweite Pflanzenklasse sind, über einer Schwellenwahrscheinlichkeit liegt.

11. Landwirtschaftliche Maschine (100), umfassend:
ein Bilderfassungssystem (110), das dazu ausgelegt ist, Bilder von Pflanzen (104) in einem Feld (160) zu erfassen, während die landwirtschaftliche Maschine an den Pflanzen in dem Feld vorbeifährt;
mehrere Behandlungsmechanismen (120), die dazu ausgelegt sind, identifizierte Pflanzen in dem Feld zu behandeln einen oder mehrere Prozessoren (702); und
ein nichtflüchtiges computerlesbares Speichermedium (722), das Computerprogrammanweisungen (724) speichert, die, wenn sie durch den einen oder die mehreren Prozessoren ausgeführt werden, die landwirtschaftliche Maschine veranlassen, das Verfahren nach einem der Ansprüche 1 bis 10 durchzuführen.

## Revendications

1. Procédé pour traiter des plantes (104) dans un champ (160), le procédé comprenant les faits suivants :
accéder (610) à une pluralité d'images de plantes dans le champ au fur et à mesure qu'une machine agricole (100) se déplace à travers le champ, traitant les plantes ;
appliquer (620), à la pluralité d'images, un premier modèle d'identification de plante (310) configuré pour identifier une première classe de plante (410B) dans les images, le premier modèle d'identification de plante (310) identifiant des plantes comme étant de la première classe de plante en déterminant des premières plausibilités que les plantes sont de la première classe de plante ;
déterminer (630), sur la base des premières plausibilités déterminées que les plantes sont de la première classe de plante, une probabilité que des plantes dans le champ sont d'une deuxième classe de plante (420A) ;
appliquer (640) un deuxième modèle d'identification de plante (310) configuré pour identifier la deuxième classe de plante dans la pluralité d'images, le deuxième modèle d'identification de plante (310) identifiant des plantes comme étant de la deuxième classe de plante en déterminant des deuxièmes plausibilités que les plantes sont de la deuxième classe de plante ; et
traiter (650), avec la machine agricole, une plante identifiée comme étant de la deuxième classe de plante sur la base de la seconde plausibilité déterminée que la plante est de la deuxième classe de plante ;
**caractérisé en ce que** le procédé détermine (630) la probabilité que des plantes dans le champ sont de la deuxième classe de plante, en appliquant un modèle de vérification (320) à la sortie du premier modèle d'identification de plante (310) ; et **en ce que** le procédé applique (640) le deuxième modèle d'identification de plante (310) sur la base d'une détermination que les plantes sont de la deuxième classe de plantes.

2. Procédé de la revendication 1, dans lequel le premier modèle d'identification de plante et le deuxième modèle d'identification de plante sont un seul modèle d'identification de plante configuré pour identifier à la fois la première classe de plante et la deuxième classe de plante.

3. Procédé de la revendication 1, dans lequel le fait d'appliquer, sur la base de la détermination, le deuxième modèle d'identification de plante (310) à la pluralité d'images comprend les faits de reconfigurer un ou plusieurs paramètres du premier modèle d'identification de plante (310) et d'appliquer le premier modèle d'identification de plante reconfiguré (310) à la pluralité d'images en tant que deuxième modèle d'identification de plante (310).

4. Procédé de la revendication 1, dans lequel le fait d'appliquer le premier modèle d'identification de plante à la pluralité d'images comprend le fait de recevoir, en provenance d'un opérateur de la machine agricole, une instruction d'identifier la première classe de plantes dans le champ.

5. Procédé de la revendication 1, dans lequel le fait de déterminer une probabilité que les plantes dans le champ sont d'une deuxième classe de plantes comprend les faits suivants :
pour chaque image dans la pluralité d'images,
déterminer une premier plausibilité que l'image comprend des plantes de la première classe de plante, et
calculer la probabilité que les plantes dans le champ sont de la deuxième classe sur la base d'une ou plusieurs premières plausibilités déterminées pour une ou plusieurs images précédentes dans la pluralité d'images.

6. Procédé de la revendication 5, dans lequel le fait de calculer la probabilité que les plantes dans le champ sont de la deuxième classe comprend le fait d'appliquer une fonction de lissage à l'une ou aux plusieurs premières plausibilités déterminées pour l'une ou les plusieurs images précédentes.

7. Procédé de la revendication 1, comprenant en outre les faits suivants :
déterminer, sur la base des deuxièmes plausibilités déterminées que les plantes sont de la deuxième classe de plante, une probabilité supplémentaire que des plantes dans le champ sont d'une troisième classe de plante ;
appliquer, sur la base de la probabilité, un troisième modèle d'identification de plante, configuré pour identifier la troisième classe de plante, à la pluralité d'images, le troisième modèle d'identification de plante identifiant des plantes comme étant de la troisième classe de plante en déterminant des troisièmes plausibilités que les plantes sont de la troisième classe de plante ; et
traiter, avec la machine agricole, une plante différente identifiée comme étant de la troisième classe de plante sur la base de la troisième plausibilité déterminée que la plante est de la troisième classe de plantes.

8. Procédé de la revendication 7, dans lequel le premier modèle d'identification de plante, le deuxième modèle d'identification de plante, et le troisième modèle d'identification de plante sont un seul modèle d'identification de plante configuré pour identifier la première classe de plante, la deuxième classe de plante, et la troisième classe de plante.

9. Procédé de la revendication 1, dans lequel le fait d'appliquer, sur la base de la détermination, le deuxième modèle d'identification de plante, configuré pour identifier la deuxième classe de plante, à la pluralité d'images comprend les faits suivants :
transmettre, à un opérateur de la machine agricole, une notification comprenant la probabilité déterminée que des plantes dans le champ sont de la deuxième classe de plante ; et
recevoir, en provenance de l'opérateur de la machine agricole, une instruction d'identifier des plantes de la deuxième classe de plantes dans le champ.

10. Procédé de la revendication 1, dans lequel le fait d'appliquer le deuxième modèle d'identification de plante, configuré pour identifier la deuxième classe de plante, à la pluralité d'images se produit de façon autonome en réponse au cas où la probabilité déterminée que des plantes dans le champ sont d'une deuxième classe de plante serait supérieure à une probabilité seuil.

11. Machine agricole (100), comprenant :
un système d'acquisition d'image (110) configuré pour capturer des images de plantes (104) dans un champ (160) au fur et à mesure que la machine agricole passe à côté des plantes dans le champ ;
une pluralité de mécanismes de traitement (120) configurés pour traiter des plantes identifiées, dans le champ ; un ou plusieurs processeurs (702) ; et
un support de stockage non transitoire lisible par ordinateur (722) stockant des instructions de programme d'ordinateur (724) qui, lorsqu'elles sont exécutées par l'un ou les plusieurs processeurs, amènent la machine agricole à réaliser le procédé selon l'une des revendications 1 à 10.
